# EUROPÄISCHE PATENTANMELDUNG

(11) **EP 3 026 621 A1**
(43) Veröffentlichungstag der Anmeldung: **01.06.2016**
(21) Anmeldenummer: 15194991.4
(22) Anmeldetag: 17.11.2015
(51) Int. Cl.: G06Q 20/40, G07F 19/00, G07C 9/00

(54) **VERFAHREN ZUR OPTIMIERUNG DER KUNDENUNTERSTÜTZUNG BEI DER BETÄTIGUNG VON ZUGANGSKONTROLL- ODER BEZAHLVORRICHTUNGEN**

(30) Priorität: 28.11.2014 DE 102014117508
(71) Anmelder: SKIDATA AG, 5083 Grödig/Salzburg (AT)
(72) Erfinder: Lenzeder, Harald, 4860 Lenzing (AT)
(74) Vertreter: Karakatsanis, Georgios

(57) **Zusammenfassung**

Im Rahmen des Verfahrens zur Optimierung der Kundenunterstützung oder "remote support" bei der Betätigung von Zugangskontroll- oder Bezahlvorrichtungen eines Zugangskontrollsystems wird vorgeschlagen, dass, wenn eine Zugangskontroll- oder Bezahlvorrichtung betätigt wird, ein vorgegebener Timer gestartet wird, wobei, wenn der vorgegebene Timer abläuft und ein Kunde bei Ablauf des Timers vor der Zugangskontroll- oder Bezahlvorrichtung steht oder sich in einem Fahrzeug vor der Zugangskontroll- oder Bezahlvorrichtung befindet oder diese noch bedient, ohne dass die zu Beginn des Starts des Timers angefangene Transaktion bzw. Interaktion zwischen dem Kunden und der Zugangskontroll- oder Bezahlvorrichtung abgeschlossen ist und/oder wenn eine n-malige Wiederholung von Bedienungsfehlern bei der Bedienung der Zugangskontroll- oder Bezahlvorrichtung erfolgt, wobei n eine vorgegebene natürliche Zahl ≥ 2 ist, automatisch eine Kommunikation oder ein automatischer Videoanruf zwischen dem Kunden und dem Personal über eine Intercom-Anlage oder eine Video-Sprechanlage hergestellt wird und eine Videoverbindung aktiviert wird, die dem Personal über eine Videokamera und eine Anzeigevorrichtung anzeigt, ob und wie der Kunde die Zugangskontroll- oder Bezahlvorrichtung bedient.

## Beschreibung

Die vorliegende Erfindung bezieht sich auf ein Verfahren zur Optimierung der Kundenunterstützung bei der Betätigung von Zugangskontroll- oder Bezahlvorrichtungen eines Zugangskontrollsystems gemäß dem Oberbegriff des Patentanspruchs 1.

Aus dem Stand der Technik ist bekannt, zum Zweck des sogenannten "remote support" einem Kunden die Möglichkeit zu geben, über eine Intercom-Anlage (Sprechanlage) mit qualifiziertem Personal zu kommunizieren, wenn bei der Betätigung einer Zugangskontroll- oder Bezahlvorrichtung eines Zugangskontrollsystems Probleme, die beispielsweise durch Bedienungsfehler oder ungültige oder nicht lesbare Kundenmedien bzw. Tickets verursacht werden, auftreten. Hierbei muss der Kunde die Kundenunterstützung aktiv anfordern, was beispielsweise durch die Betätigung eines entsprechenden Schalters bzw. einer entsprechenden Taste erfolgen kann.

Hierbei muss der Kunde in der Regel dem Personal mitteilen, was er gerade tut, welche Schwierigkeiten bzw. Probleme bei der Betätigung einer Zugangskontroll- oder Bezahlvorrichtung aufgetreten sind und gegebenenfalls was er auf einem Bildschirm der Zugangskontroll- oder Bezahlvorrichtung sieht. Dies bedeutet jedoch, dass die Lösung des Problems des Kunden viel Zeit in Anspruch nimmt, da zum einen präzise Informationen seitens des Kunden benötigt werden und zum anderen das Personal nicht sofort erkennen kann, worin das Problem besteht und wodurch es verursacht ist.

Der vorliegenden Erfindung liegt die Aufgabe zugrunde, ein Verfahren zur Optimierung der Kundenunterstützung bei der Betätigung von Zugangskontroll- oder Bezahlvorrichtungen eines Zugangskontrollsystems anzugeben, durch dessen Durchführung einem Kunden schnell und effizient geholfen werden kann. Dies ist von besonderer Bedeutung, da bei derartigen Zugangskontroll- oder Bezahlvorrichtungen sich schnell Warteschlangen bilden können, wodurch in nachteiliger Weise der normale Betrieb beeinträchtigt wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Optimierung der Kundenunterstützung bei der Betätigung von Zugangskontroll- oder Bezahlvorrichtungen eines Zugangskontrollsystems vorgeschlagen, in Rahmen dessen, wenn eine Zugangskontroll- oder Bezahlvorrichtung betätigt wird, ein vorgegebener Timer gestartet wird, wobei, wenn der vorgegebene Timer abläuft und ein Kunde bei Ablauf des Timers vor der Zugangskontroll- oder Bezahlvorrichtung steht oder sich in einem Fahrzeug vor der Zugangskontroll- oder Bezahlvorrichtung befindet oder diese noch bedient, ohne dass die zu Beginn des Starts des Timers angefangene Transaktion bzw. Interaktion (im nachfolgenden Vorgang genannt) zwischen dem Kunden und der Zugangskontroll- oder Bezahlvorrichtung abgeschlossen ist, automatisch eine Kommunikation zwischen dem Kunden und dem Personal über eine Intercom-Anlage oder eine Video-Sprechanlage hergestellt wird und eine Videoverbindung aktiviert wird, die dem Personal über eine Videokamera und eine Anzeigevorrichtung anzeigt, ob und wie der Kunde die Zugangskontroll- oder Bezahlvorrichtung bedient.

Durch diese Maßnahmen kann dem Kunden über die Intercom-Anlage oder eine Video-Sprechanlage mitgeteilt werden, wie die Zugangskontroll- oder Bezahlvorrichtung bedient werden soll, um den gewünschten Vorgang abzuschließen, wobei anhand der Videoverbindung überprüft werden kann, ob der Kunde den Anweisungen folgt bzw. ob er die Zugangskontroll- oder Bezahlvorrichtung richtig bedient. Auch kann erkannt werden, ob ein Bedienungsfehler vorliegt oder ein ungültiges oder nicht lesbares Kundenmedium bzw. Ticket verwendet wird. Die Kommunikation über die Video-Sprechanlage kann hinsichtlich der Bildübertragung bi-direktional erfolgen.

Die Anwesenheit eines Kunden vor einer Zugangskontroll- bzw. Bezahlvorrichtung wird durch zumindest einen geeigneten Sensor, beispielsweise durch eine Lichtschranke, eine Wärmekamera, einen Radarsensor oder einen Wiegesensor erkannt. Durch den zumindest einen Sensor kann auch die Anwesenheit eines Fahrzeugs erfasst werden, in dem sich ein Kunde befindet, wobei zur Fahrzeugerkennung vorzugsweise zumindest eine Induktionsschleife oder zumindest ein Radarsensor verwendet wird.

Im Rahmen einer vorteilhaften Weiterbildung des erfindungsgemäßen Verfahrens wird vorgeschlagen, zusätzlich zur Aktivierung der Intercom-Anlage oder der Video-Sprechanlage und der Videoverbindung bei Ablauf des Timers als Kundenunterstützungsmaßnahme eine Fernsteuerung der Zugangskontroll- oder Bezahlvorrichtung zum Abschließen des vom Kunden gewünschten Vorgangs durchzuführen.

Dadurch kann der gewünschte Vorgang für den Kunden sichtbar abgeschlossen werden, wodurch der Kunde die Bedienung der Vorrichtung lernen kann. Zu diesem Zweck ist die Zugangskontroll- bzw. Bezahlvorrichtung zum Zweck der Datenkommunikation mit einem Computer verbunden, über den die Fernsteuerung durchgeführt wird.

Die Einleitung der Kundenunterstützungsmaßnahmen wird durch eine Steuerung gesteuert, welche mit der Zugangskontroll- oder Bezahlvorrichtung und dem zumindest einen Sensor zur Erfassung der Anwesenheit eines Kunden oder eines Fahrzeugs vor einer Zugangskontroll- bzw. Bezahlvorrichtung zum Zweck der Datenkommunikation verbunden ist. Wenn der vorgegebene Timer abgelaufen ist, wird von der Zugangskontroll- oder Bezahlvorrichtung ein entsprechendes Signal an die Steuerung geschickt.

Im Rahmen einer Weiterbildung der Erfindung wird mittels geeigneter Kameras und geeigneter Auswerteelektronik eine Gesichtserkennung durchgeführt, um sicherzustellen, dass der Kunde, der zu Beginn des Starts des Timers eine Transaktion bzw. Interaktion initiiert hat auch die Person ist, die nach Ablauf des vorgegebenen Timers vor der Zugangskontroll- oder Bezahlvorrichtung steht oder sich in einem Fahrzeug vor der Zugangskontroll- oder Bezahlvorrichtung befindet. Die Auswerteelektronik ist mit der Steuerung verbunden, die bei Personenidentität die Kundenunterstützungsmaßnahmen einleitet.

Zusätzlich oder alternativ zum Kriterium des Ablaufs eines vorgegebenen Timers kann als Kriterium für den Beginn der Einleitung der Kundenunterstützungsmaßnahmen die n-malige Wiederholung von Bedienungsfehlern bei der Bedienung der Zugangskontroll- oder Bezahlvorrichtung herangezogen werden, wobei n eine vorgegebene natürliche Zahl ≥ 2 ist. Ist dieses Kriterium erfüllt, wird von der Zugangskontroll- oder Bezahlvorrichtung ein entsprechendes Signal an die Steuerung geschickt, die anschließend die Kundenunterstützungsmaßnahmen einleitet.

## Patentansprüche

1. Verfahren zur Optimierung der Kundenunterstützung bei der Betätigung von Zugangskontroll- oder Bezahlvorrichtungen eines Zugangskontrollsystems, **dadurch gekennzeichnet, dass**, wenn eine Zugangskontroll- oder Bezahlvorrichtung betätigt wird, ein vorgegebener Timer gestartet wird, wobei, wenn der vorgegebene Timer abläuft und ein Kunde bei Ablauf des Timers vor der Zugangskontroll- oder Bezahlvorrichtung steht oder sich in einem Fahrzeug vor der Zugangskontroll- oder Bezahlvorrichtung befindet oder diese noch bedient, ohne dass die zu Beginn des Starts des Timers angefangene Transaktion bzw. Interaktion zwischen dem Kunden und der Zugangskontroll- oder Bezahlvorrichtung abgeschlossen ist und/oder wenn eine n-malige Wiederholung von Bedienungsfehlern bei der Bedienung der Zugangskontroll- oder Bezahlvorrichtung erfolgt, wobei n eine vorgegebene natürliche Zahl ≥ 2 ist, automatisch eine Kommunikation zwischen dem Kunden und dem Personal über eine Intercom-Anlage oder eine Video-Sprechanlage hergestellt wird und eine Videoverbindung aktiviert wird, die dem Personal über eine Videokamera und eine Anzeigevorrichtung anzeigt, ob und wie der Kunde die Zugangskontroll- oder Bezahlvorrichtung bedient.

2. Verfahren zur Optimierung der Kundenunterstützung bei der Betätigung von Zugangskontroll- oder Bezahlvorrichtungen eines Zugangskontrollsystems, nach Anspruch 1, **dadurch gekennzeichnet, dass** die Anwesenheit eines Kunden vor einer Zugangskontroll- bzw. Bezahlvorrichtung durch zumindest einen Sensor, der als Lichtschranke, Wärmekamera, Radarsensor oder Wiegesensor ausgeführt ist, erkannt wird, wobei zur Fahrzeugerkennung zumindest ein Radarsensor oder eine Induktionsschleife verwendet wird.

3. Verfahren zur Optimierung der Kundenunterstützung bei der Betätigung von Zugangskontroll- oder Bezahlvorrichtungen eines Zugangskontrollsystems, nach Anspruch 1 oder 2, **dadurch gekennzeichnet, dass** zusätzlich zur Aktivierung der Intercom-Anlage oder der Video-Sprechanlage und der Videoverbindung bei Ablauf des Timers als Kundenunterstützungsmaßnahme eine Fernsteuerung der Zugangskontroll- oder Bezahlvorrichtung zum Abschließen des vom Kunden gewünschten Vorgangs durchgeführt wird, wodurch der gewünschte Vorgang für den Kunden sichtbar abgeschlossen werden kann.

4. Verfahren zur Optimierung der Kundenunterstützung bei der Betätigung von Zugangskontroll- oder Bezahlvorrichtungen eines Zugangskontrollsystems, nach Anspruch 1, 2 oder 3, **dadurch gekennzeichnet, dass** mittels geeigneter Kameras und geeigneter Auswerteelektronik eine Gesichtserkennung durchgeführt wird, um sicherzustellen, dass der Kunde, der zu Beginn des Starts des Timers eine Transaktion bzw. Interaktion initiiert hat auch die Person ist, die nach Ablauf des vorgegebenen Timers vor der Zugangskontroll- oder Bezahlvorrichtung steht oder sich in einem Fahrzeug vor der Zugangskontroll- oder Bezahlvorrichtung befindet.
